# EUROPEAN PATENT APPLICATION

(11) **EP 1 621 364 A1**
(43) Date of publication of application: **01.02.2006**
(21) Application number: 05016141.3
(22) Date of filing: 26.07.2005
(51) Int. Cl.: B60B 27/00

(54) **Bearing apparatus for a driving wheel of vehicle**

(30) Priority: 27.07.2004 JP 2004218832
(71) Applicant: NTN CORPORATION, Osaka (JP)
(72) Inventor: Terada, Hiroki, Iwata-shi Shizuoka-ken (JP); Takubo, Takayasu, Iwata-shi Shizuoka-ken (JP); Aritake, Yasuhiro, Iwata-shi Shizuoka-ken (JP)
(74) Representative: Thielmann, Andreas

(57) **Abstract**

An object of the present invention is to provide a bearing apparatus for a driving wheel of vehicle which can prevent generation of stick-slip noise as well as fretting wear and thus can improve durability of the bearing apparatus. According to the present invention, there is provided a bearing apparatus for a driving wheel of vehicle comprising an outer member (10) formed with double row outer raceway surfaces (10a, 10a) on the inner circumferential surface thereof; an inner member (1, 27) formed with double row inner raceway surface (2a (24a), 3a) arranged oppositely to the double row outer raceway surfaces (10a, 10a); double row rolling elements (6) contained freely rollably between the outer and inner raceway surfaces (10a, 10a; 2a (24a), 3a) respectively of the outer and inner member (10; 1, 27); and a constant velocity universal joint (11, 26) for torque transmission inserted into the inner member (10; 1, 27) with abutting thereto and axially separably connected thereto via a nut (19) characterized in that the end surface (13a, 23a, 28a) of a shoulder (13, 28) of an outer joint member (15, 29) and the end surface of the inner member (1, 27) are previously formed so that these end surfaces line contact with each other at a vertex formed by inclined surfaces on the end of the inner member (1,27).

## Description

### BACKGROUND OF THE INVENTION

### Field of the Invention

The present invention relates to a bearing apparatus for supporting a driving wheel of vehicle such as an automobile, and more particularly to a bearing apparatus for a driving wheel of vehicle for rotatably supporting a driving wheel (i.e. a front wheel of FF vehicle, a rear wheel of FR or RR vehicle, and front and rear wheels of 4 WD vehicle) relative to a suspension apparatus.

### Description of Background Art

A power transmitting apparatus of vehicle is required not only to transmit the power from an engine to a wheel but to allow radial and axial displacements or momentum displacement of wheel caused by bound of vehicle during rolling on a rough road or during turning of vehicle. Accordingly one end of a driving shaft arranged between the engine and the driving wheel is connected to a differential gear unit via a sliding type constant velocity universal joint and the other end thereof is connected to the driving wheel via a bearing apparatus for a driving wheel including a non-sliding type constant velocity universal joint.

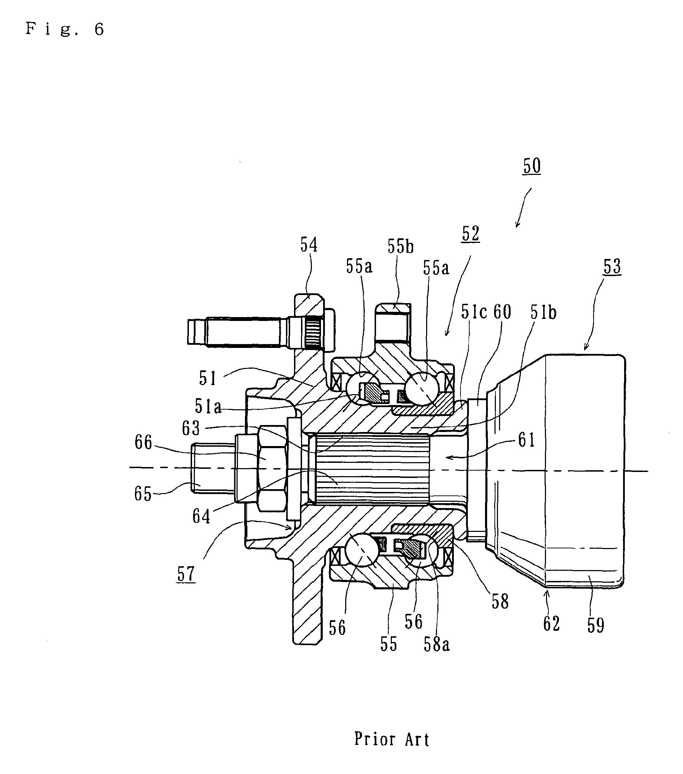

Several types of structures of such a bearing apparatus for a driving wheel of vehicle are proposed and one of them is known as shown in Fig. 6. The bearing apparatus for a driving wheel 50 comprises a hub wheel 51 adapted to mount a driving wheel (not shown) at one end, a double row rolling bearing 52 for rotatably supporting the hub wheel 51, and a non-sliding type constant velocity universal joint 53 for transmitting the power of driving shaft (not shown) to the hub wheel 51.

The hub wheel 51 has a wheel mounting flange 54 integrally formed therewith and is formed on the outer circumferential surface with an inner raceway surface 51a as well as formed with an cylindrical portion 51b axially extending from the inner raceway surface 51a. The double row rolling bearing 52 comprises an outer member 55 formed integrally therewith a body mounting flange 55b on the outer circumferential surface thereof as well as a double row outer raceway surfaces 55a and 55a on the inner circumferential surface thereof, and an inner member 57 adapted to be inserted into the outer member 55 via double row rolling elements (balls) 56 and 56 contained within the outer member 55.

The inner member 57 comprises the hub wheel 51, and an inner ring 58 press-fitted onto the axially extending portion 51b of the hub wheel 51 and formed with an inner raceway surface 58a on its outer circumferential surface. The inner ring 58 is secured axially immovable by a caulked portion 51c formed by plastically deforming the end portion of the axially extending portion 51b of the hub wheel 51radially outward.

The constant velocity universal joint 53 comprises a mouth portion 59, and an outer joint member 62 integrally formed with a shoulder 60 forming the bottom of the mouth portion 59 and with a shaft portion 61 extending from a shoulder 60. The outer joint member 62 is inserted into the inner member 57 (hub wheel 51) in a manner of enabling torque transmission therebetween. That is, a serration 63 formed on the inner circumferential surface of the hub wheel 51 mates a serration 64 formed on the outer circumferential surface of the shaft portion 61 of the outer joint member 62. The shaft portion 61 of the outer joint member 62 is inserted into the hub wheel 51 until the shoulder 60 of the outer joint member 62 abuts the caulked portion 51c, and the hub wheel 51 and the outer joint member 62 are joined together so as not to be axially separated by fastening at a predetermined fastening torque a securing nut 66 on an external thread 65 formed on the end of the shaft portion 61.

It is known that a large torque is applied from an engine to a driving wheel via a sliding type constant velocity universal joint (not shown) at a low engine speed or at the start of vehicle and thus torsion is caused on a driving shaft. Accordingly torsion is also caused on the inner member 57 of the double row rolling bearing 52 supporting the driving shaft. When the large torque is caused on the driving shaft, stick-slip noise will be caused by sudden slip between the abutting surfaces of the outer joint member 62 and the inner member 57 if there would be a circumferential gap between the serration 63 of the hub wheel 51 and the serration 64 of the shaft portion 61 of the outer joint member 62.

For dealing with this problem, in the bearing apparatus for driving wheel of vehicle 50 of the prior art, the end surface of the caulked portion 51c of the hub wheel 51 against which the shoulder 60 of the outer joint member 62 abuts is finished as a flat surface. This makes it possible to bring the surface contact between the caulked portion 51c and the shoulder 60 and thus to reduce the bearing stress applied to the caulked portion 51c by the fastening force of the nut 66. Accordingly it is possible to prevent plastic deformation of the caulked portion 51c as well as loose of the nut 66 and thus to prevent generation of the stick-slip noise due to sudden slip between the abutting surfaces of the shoulder 60 and the caulked portion 51c (see Japanese Laid-open Patent Publication No. 5404/1999).

However in the bearing apparatus of the prior art, there is caused a problem that the end surface of the shoulder 60 would be inclined due to extension of the shaft portion 61 of the outer joint member 62 when the hub wheel 51 and the outer joint member 62 are joined together by the nut 66. Due to the inclination of the end surface of the shoulder 60, there would be caused the line contact between the abutting surfaces of the caulked portion 51c and the shoulder although the caulked portion 51c is previously finished as a flat surface so as to obtain the surface contact between the caulked portion 51c and the shoulder 60. This would cause repeating relative rotation between the caulked portion 51c and the shoulder 60 for a long term and thus cause not only stick-slip noise but rattle due to progression of fretting wear.

### SUMMARY OF THE INVENTION

It is, therefore, an object of the present invention to provide a bearing apparatus for a driving wheel of vehicle which can prevent generation of stick-slip noise as well as fretting wear and thus can improve durability of the bearing apparatus.

For achieving the object of the present invention, there is provided a bearing apparatus for a driving wheel of vehicle comprising an outer member formed with double row outer raceway surfaces on the inner circumferential surface thereof; an inner member formed with double row inner raceway surface arranged oppositely to the double row outer raceway surfaces; double row rolling elements contained freely rollably between the outer and inner raceway surfaces respectively of the outer and inner member; and a constant velocity universal joint for torque transmission inserted into the inner member with abutting thereto and axially separably connected thereto via a nut characterized in that the end surface of a shoulder of an outer joint member and the end surface of the inner member are previously formed so that these end surfaces line contact with each other at a vertex formed by inclined surfaces on the end of the inner member.

Since the end surface of a shoulder of a outer joint member inserted into the inner member with abutting thereto and the end surface of the inner member are previously formed so that these end surfaces line contact with each other at a vertex formed by inclined surfaces on the end of the inner, these end surfaces can surface contact each other. This is because that the end surface of the shoulder is inclined due to extension of the shaft portion of the outer joint member when the inner member and the outer joint member are joined together by fastening the nut. Thus it is possible to provide a bearing apparatus for a driving wheel of vehicle which can prevent generation of stick-slip noise as well as fretting wear and thus can improve durability of the bearing apparatus.

According to the present invention, the inner member comprises; a hub wheel having a wheel mounting flange and formed on the outer circumferential surface with a one inner raceway surface opposing to one of said outer raceway surfaces as well as formed with an cylindrical portion axially extending from the inner raceway surface; and an inner ring press fitted onto the axially extending cylindrical portion of the hub wheel and formed on the outer circumferential surface with the other inner raceway surface opposing to the other outer raceway surface, and wherein the inner ring is secured axially immovable relative to the hub wheel by a caulked portion formed by plastically deforming radially outward the end of the axially extending cylindrical portion, and the inner end surface of the caulked portion abuts to the end surface of the shoulder of the outer joint member. The end surface of a shoulder of an outer joint member and the end surface of the inner member can surface contact each other. This is because that the end surface of the shoulder is inclined due to extension of the shaft portion of the outer joint member when the inner member and the outer joint member are joined together by fastening the nut. Thus it is possible to reduce the bearing stress applied to the caulked portion 51c, and to provide a bearing apparatus for a driving wheel of vehicle which can prevent generation of stick-slip noise as well as fretting wear and thus can improve durability of the bearing apparatus.

It is preferable that the inner end surface of the caulked portion is formed as an inclined surface inclined at a predetermined angle relative to a vertical surface. It is also preferable as defined in claim 4, that the inner end surface of the caulked portion is formed as a substantially flat surface, and the end surface of the shoulder is formed as an inclined surface inclined at a predetermined angle relative to a vertical surface.

According to the present invention, an axially deformable length between the end surface of the shoulder and the end surface of the inner member is set within a range of 0.010-0.015 mm. This makes it possible to effectively achieve the surface contact between the abutting surfaces of the inner member and the shoulder of the outer joint member because the end surface of the shoulder is inclined due to extension of the shaft portion of the outer joint member when the inner member and the outer joint member are joined together by fastening the nut.

### [Effect of the Invention]

Since according to the bearing apparatus for a driving wheel of vehicle comprises an outer member formed with double row outer raceway surfaces on the inner circumferential surface thereof; an inner member formed with double row inner raceway surface arranged oppositely to the double row outer raceway surfaces; double row rolling elements contained freely rollably between the outer and inner raceway surfaces respectively of the outer and inner member; and a constant velocity universal joint for torque transmission inserted into the inner member with abutting thereto and axially separably connected thereto via a nut characterized in that the end surface of a shoulder of a outer joint member and the end surface of the inner member are previously formed so that these end surfaces line contact with each other at a vertex formed by inclined surfaces on the end of the inner member, the end surface of a shoulder of an outer joint member and the end surface of the inner member can surface contact each other. Thus it is possible to provide a bearing apparatus for a driving wheel of vehicle which can prevent generation of stick-slip noise as well as fretting wear and thus can improve durability of the bearing apparatus.

### [Best Mode for carrying out the Invention]

A bearing apparatus for a driving wheel of vehicle comprising an outer member formed with double row outer raceway surfaces on the inner circumferential surface thereof; an inner member including a hub wheel having a wheel mounting flange and formed on the outer circumferential surface with a one inner raceway surface opposing to one of said outer raceway surfaces as well as formed with an cylindrical portion axially extending from the inner raceway surface, and also including an inner ring press fitted onto the axially extending cylindrical portion of the hub wheel and formed on the outer circumferential surface with the other inner raceway surface opposing to the other outer raceway surface; double row rolling elements contained freely rollably between the outer and inner raceway surfaces respectively of the outer and inner member; and a constant velocity universal joint for torque transmission inserted into the inner member with abutting thereto and axially separably connected thereto via a nut; and wherein the inner ring is secured axially immovable relative to the hub wheel by a caulked portion formed by plastically deforming radially outward the end of the axially extending cylindrical portion; characterized in that the end surface of a shoulder of an outer joint member and the end surface of the inner member are previously formed so that these end surfaces line contact with each other at a vertex formed by inclined surfaces on the end of the inner member.

### BRIEF DESCRIPTION OF THE DRAWINGS

Additional advantages and features of the present invention will become apparent from the subsequent description and the appended claims, taken in conjunction with the accompanying drawings, wherein:
- Fig. 1: is a longitudinal section view showing a first embodiment of the bearing apparatus for a driving wheel of vehicle of the present invention;
- Fig. 2 (a): is an enlarged view of a portion of Fig. 1;
- Fig. 2 (b): is an enlarged view showing a modification of Fig. (a);
- Fig.3: is a diagrammatic view showing conditions of contact between the caulked portion and the shoulder;
- Fig. 4: is a longitudinal section view showing a second embodiment of the bearing apparatus for a driving wheel of vehicle of the present invention;
- Fig. 5: is an enlarged view of a portion of Fig. 4; and
- Fig. 6: is a longitudinal section view of another bearing apparatus for a driving wheel of vehicle of the prior art.

### DESCRIPTION OF THE PREFERRED EMBODIMENTS

### [Embodiment 1]

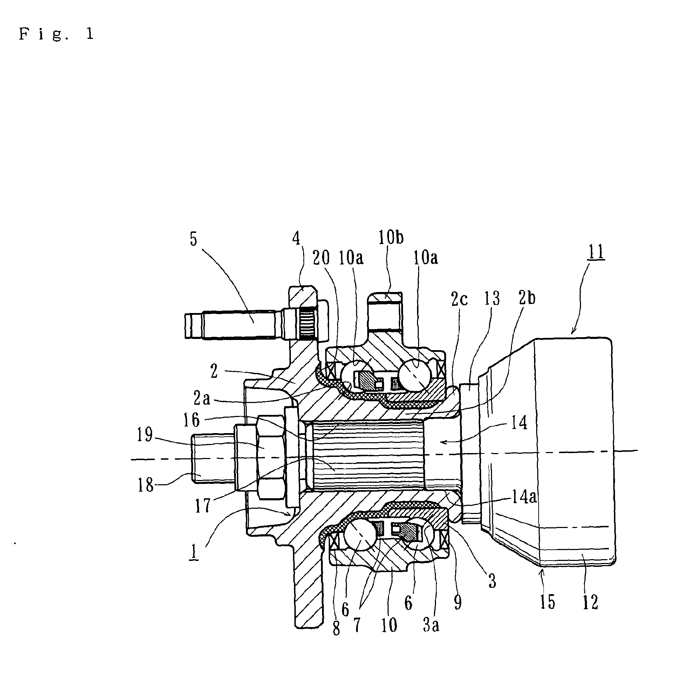

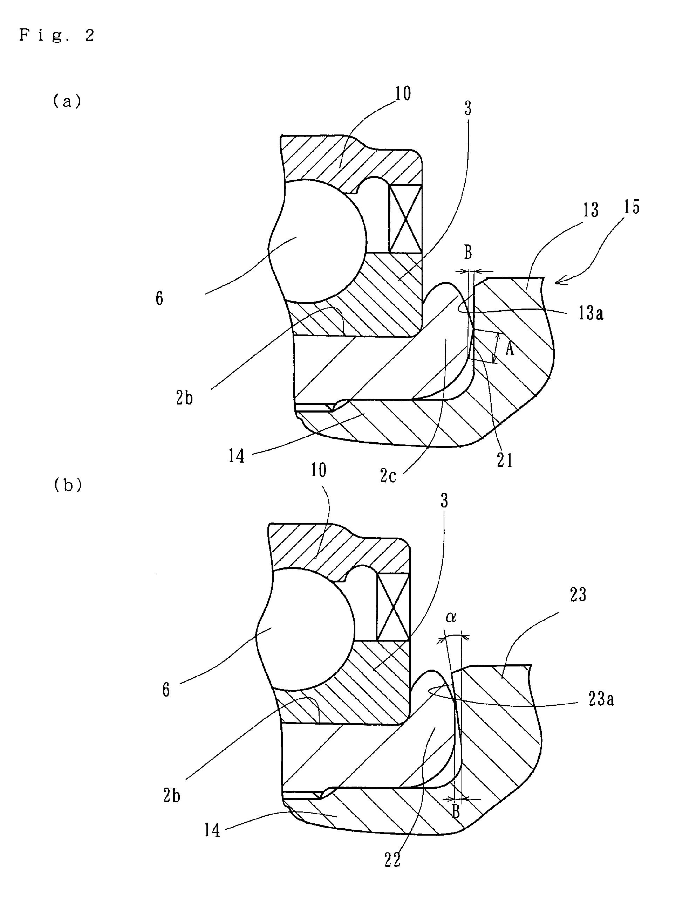

Fig. 1 shows a first embodiment of a bearing apparatus for a driving wheel of vehicle of the present invention, Fig. 2 (a) is an enlarged view of a portion of Fig. 1, and Fig. 2 (b) is an enlarged view showing a modification of Fig. (a). In the description below, a term "outboard side" (a left-hand side in drawings) of the apparatus denotes a side which is positioned outside of the vehicle body and a term "inboard side" (a right-hand side in drawings) of the apparatus denotes a side which is positioned inside of the body when the bearing apparatus is mounted on the vehicle body.

The bearing apparatus for a driving wheel of vehicle comprises an inner member 1, an outer member 10, and a double row rolling elements (balls) 6 rollably contained between the inner and outer members 1 and 10. The inner member 1 comprises a hub wheel 2 and a separate inner ring 3 press-fitted onto the hub wheel 2. The hub wheel 2 has a wheel mounting flange 4 for mounting a wheel (not shown) integrally formed therewith at the outboard side end, and hub bolts 5 for securing a wheel on the flange 4 are arranged equidistantly along the periphery of the flange 4.

The hub wheel 2 is formed with an inner raceway surface 2a on its outer circumferential surface and axially extending cylindrical portion 2b axially extending from the inner raceway surface 2a. An inner ring 3 formed with an inner raceway surface 3a on its outer circumferential surface is press-fitted onto the axially extending portion 2b of the hub wheel 2. The inner ring 3 is secured axially immovable to prevent it from being fallen off from the axially extending portion 2b by a caulked portion 2c formed by plastically deforming the end portion of the axially extending portion 2b radially outward. This embodiment adopts the third generation self-retaining structure which can control the preload without strongly fastening a nut as a conventional manner thus it is possible to easily incorporate the bearing apparatus to a vehicle and also to maintain the preload for a long term.

The outer member 10 is integrally formed on its outer circumferential surface with a body mounting flange 10b for mounting this outer member 10 on a body (not shown) and is also formed on its inner circumferential surface with double row outer raceway surfaces 10a and 10a opposing to the inner raceway surfaces 2a and 3a. Double row rolling elements 6 and 6 are freely rollably held between the outer and inner raceway surfaces 10a, 10a and 2a, 3a by cages 7 and 7. Seals 8 and 9 are arranged at the ends of the outer member 10 to prevent leak of grease contained within the bearing as well as ingress of rain water or dusts from outside.

The constant velocity universal joint 11 comprises a cup-shaped mouth portion 12, and an outer joint member 15 integrally formed with a shoulder 13 forming the bottom of the mouth portion 12 and with a shaft portion 14 extending from a shoulder 13. The outer joint member 15 is inserted into the inner member 1 (i.e. hub wheel 2) in a manner of enabling torque transmission therebetween. That is, a serration (or spline) 16 formed on the inner circumferential surface of the hub wheel 2 mates a serration (or spline) 17 formed on the outer circumferential surface of the shaft portion 14 of the outer joint member 15. The shaft portion 14 of the outer joint member 15 is inserted into the hub wheel 2 until the shoulder 13 of the outer joint member 15 abuts the caulked portion 2c of the hub wheel 2, and the hub wheel 2 and the outer joint member 15 are joined together axially separably by fastening a securing nut 19 on an external thread 18 formed on the end of the shaft portion 14 with a predetermined fastening torque

The outer joint member 15 is made of medium carbon steel including carbon of 0.40~0.80% by weight such as S53C and formed with hardened layer having a surface hardness 58-64 HRC by high frequency induction hardening from the shoulder 13 to the shaft portion 14. The base portion 14a of the shaft portion 14 is inserted into the axially extending portion 2b via a predetermined radial gap therebetween so that the base portion 14a can support the momentum load applied to the bearing apparatus.

The hub wheel 2 is made of medium carbon steel including carbon of 0.40~0.80% by weight such as S53C and formed with hardened layer 20 (shown by cross-hatching in Fig. 1) having a surface hardness 58-64 HRC by high frequency induction hardening at the inner raceway surface 2a, a seal land portion with which a sealing means 8 contacts, and the axially extending portion 2b. Such a high frequency induction hardening pattern increases the strength of the hub wheel 2 and improves the durability of the bearing apparatus due to reduction of fretting wear at the fitting surface of the inner ring 3. The caulked portion 2c is remained as a no-quenching portion having a surface hardness below 25 HRC after its forging.

On the other hand, the inner ring 3 is made of high carbon chrome bearing steel such as SUJ2 and is hardened to its core by dipping quenching to have a surface hardness of 58-64 HRC. The outer member 10 is made of medium carbon steel including carbon of 0.40~0.80% by weight such as S53C and its double outer raceway surfaces 10a and 10a are hardened by high frequency induction quenching to have a surface hardness of 58-64 HRC. In the illustrated embodiment, a double row angular ball bearing using balls as rolling elements is shown, however other bearing such as a double row tapered roller bearing using tapered rollers as the rolling elements may be adopted.

According to this embodiment as shown enlarged in Fig.2 (a), the inner surface of the caulked portion 2c is previously formed by inclined surfaces as having a vertex at the intersection thereof so that the inner surface of the caulked portion 2c line contacts the end surface 13a of the shoulder 13 at the vertex. A length "A" of the inclined surface 21 is set within a range of 3-5 mm, and an axial depth "B" of the inclined surface 21 relative to the end surface 13a of the shoulder 13 is set within a range of 0.010-0.015 mm. When the hub wheel 2 and the outer joint member 15 are joined together by fastening the nut 19, the shaft portion 14 of the outer joint member 15 is stretched and thus the end surface 13a of the shoulder 13 is inclined. Thus the abutting surfaces of the caulked portion 2c and the shoulder 13 are deformed from the line contact to the surface contact (Fig. 1). Accordingly, the bearing stress caused on the caulked portion 2c by the fastening force can be reduced and thus it is possible to prevent plastic deformation of the caulked portion 2c and loose of the securing nut 19, and thus to prevent the fretting wear and stick-slip noise.

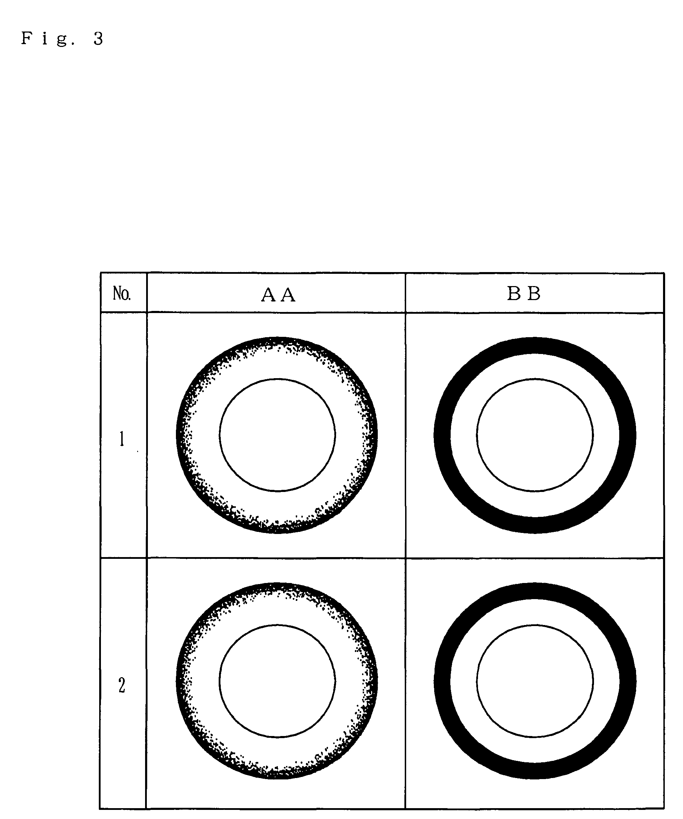

The applicant examined the condition of contact between the abutting surfaces of the caulked portion 2c and the end surface 13a of the shoulder 13 by fastening the nut 19 to join together the hub wheel 2 and the outer joint member 15 with interposing a pressure sensitive paper between the caulked portion 2c and the end surface 13a of the shoulder. Results of which are shown in Fig. 3 in which "AA" denotes a condition of hand-fastening (i.e. initial contact condition) and "BB" denotes a condition after being fastened with the fastening torque of 150 Nm, and a numeral "1" denotes a sample having the axial depth "B" (Figs. 2 (a) and (b)) of 10.5 µ m, and a numeral "2" denotes a sample having the axial depth "B" of 12.5 µ m.

As can be seen from these results, at the initial stage, the inner end surface of the caulked portion 2c line contacts the end surface 13a of the shoulder 13 at a vertex formed by inclined surfaces on the end of the inner member, on the other hand, substantially whole end surface of the caulked portion 2c surface contacts the end surface 13a of the shoulder 13 after the nut 19 has been fastened at its predetermined fastening torque.

Fig. 2 (b) is a modification of the embodiment of Fig. 2 (a). In this example, the inner end surface of the caulked portion 22 is formed substantially as a flat surface, on the other hand, the end surface 23a of the shoulder 23 is formed as a surface inclined at a predetermined angle α relative to a vertical surface. At the initial contact stage, the end surface of the caulked portion 22 and the end surface 23a of the shoulder 23 line contact each other at the vertex of the end surface of the caulked portion 22. The axial depth "B" of the inclined surface 23a relative to the end surface of the caulked portion 22 is set within a range of 0.010-0.015 mm. Similarly to the previous example, when the hub wheel and the outer joint member are joined together by fastening the nut, the shaft portion 14 of the outer joint member is stretched and thus the end surface 23a of the shoulder 23 is inclined, and thus the abutting surfaces of the caulked portion 22 and the shoulder 23 are surface contacted each other.

### [Embodiment 2]

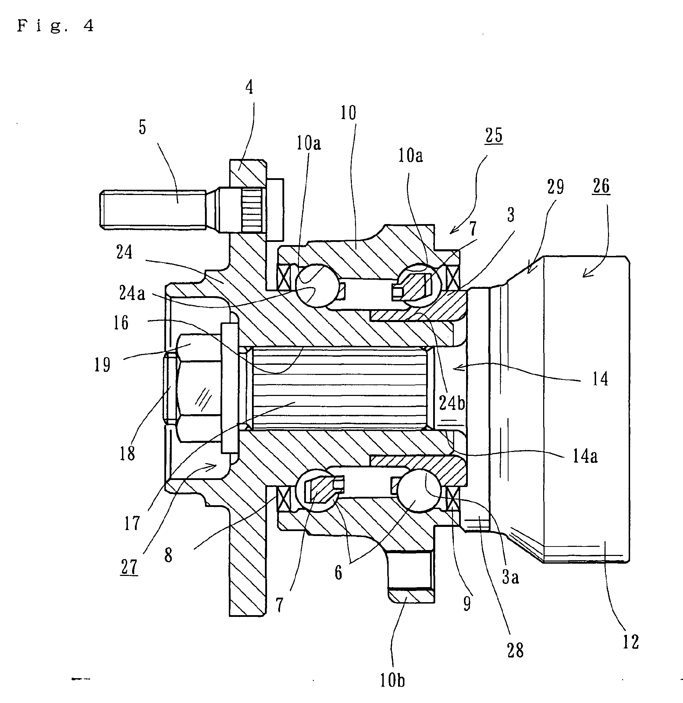

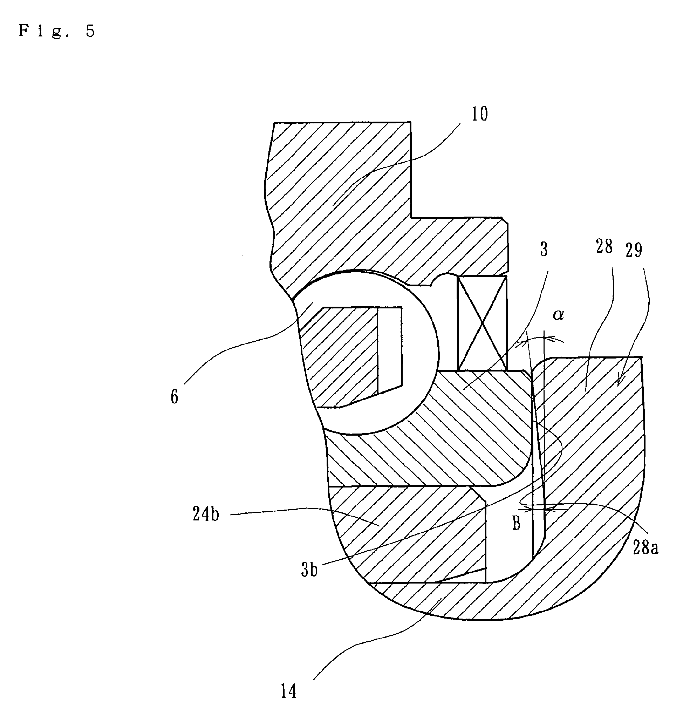

Fig. 4 is a longitudinal cross-section view of a second embodiment of the bearing apparatus for a driving wheel of vehicle of the present invention. Fig. 5 is a enlarged view of a portion of Fig. 4. Same reference numerals are used for designating same parts having same functions of the first embodiment.

This bearing apparatus is that called as a "third generation" and comprises a hub wheel 24, a double row rolling bearing 25, and constant velocity universal joint 26 and the double row rolling bearing 25 includes the outer member 10, the inner member 27, and a double row rolling elements 6 and 6.

The inner member 27 includes the hub wheel 24 and the inner ring 3 press-fitted onto the hub wheel 24. The hub wheel 24 is made of medium carbon steel including carbon of 0.40~0.80% by weight such as S53C and is formed with an inner raceway surface 24a on its outer circumferential surface and axially extending cylindrical portion 24b axially extending from the inner raceway surface 24a.

The constant velocity universal joint 26 comprises a cup-shaped mouth portion 12, and an outer joint member 29 integrally formed with a shoulder 28 forming the bottom of the mouth portion 12 and with a shaft portion 14 extending from a shoulder 28. The outer joint member 29 is made of medium carbon steel including carbon of 0.40~0.80% by weight such as S53C and formed with hardened layer having a surface hardness 58-64 HRC by high frequency induction hardening from the shoulder 28 to the shaft portion 14.

The shaft portion 14 of the outer joint member 29 is inserted into the hub wheel 24 until the shoulder 28 of the outer joint member 29 abuts the end surface of the inner ring 3, and the hub wheel 24 and the outer joint member 29 are joined together axially separably by fastening a securing nut 19 on an external thread 18 formed on the end of the shaft portion 14 with a predetermined fastening torque

Similarly to the previous embodiment and as shown in Fig. 5 as an enlarged manner, the end surface 28a of the shoulder 28 is formed as a surface inclined at a predetermined angle α relative to a vertical surface. At the initial contact stage, the inner end surface 3b of the inner ring 3 and the end surface 28a of the shoulder 28 line contact each other at the vertex of the corner edges of these end surfaces 3b and 28a. The axial depth "B" of the inclined surface 28a of the shoulder 28 relative to the inner end surface 3b of the inner ring 3 is set within a range of 0.010-0.015 mm. Similarly to the previous example, when the hub wheel and the outer joint member are joined together by fastening the nut, the shaft portion 14 of the outer joint member is stretched and thus the end surface 28a of the shoulder 28 is inclined, and thus the abutting surfaces of the inner end surface 3b of the inner ring 3 and the end surface 28a of the shoulder 28 are surface contacted each other.

### [Applicability in Industries]

The bearing apparatus for a driving wheel of vehicle of the present invention can be applied to all of the bearing apparatus of the first through third generations having double row rolling elements arranged between the outer and inner members.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

## Claims

1. A bearing apparatus for a driving wheel of vehicle comprising an outer member (10) formed with double row outer raceway surfaces (10a, 10a) on the inner circumferential surface thereof;
an inner member (1, 27) formed with double row inner raceway surface (2a (24a), 3a) arranged oppositely to the double row outer raceway surfaces (10a, 10a); double row rolling elements (6) contained freely rollably between the outer and inner raceway surfaces (10a, 10a; 2a (24a), 3a) respectively of the outer and inner member (10; 1, 27); and
a constant velocity universal joint (11, 26) for torque transmission inserted into the inner member (10; 1, 27) with abutting thereto and axially separably connected thereto via a nut (19)
**characterized in that**;
the end surface (13a, 23a, 28a) of a shoulder (13, 28) of an outer joint member (15, 29) and the end surface of the inner member (1, 27) are previously formed so that these end surfaces line contact with each other at a vertex formed by inclined surfaces on the end of the inner member (1,27).

2. A bearing apparatus for a driving wheel of vehicle of claim 1 wherein said inner member (1) comprises;
a hub wheel (2) having a wheel mounting flange (4) and formed on the outer circumferential surface with a one inner raceway surface (2a) opposing to one of said outer raceway surfaces (10a, 10a) as well as formed with an cylindrical portion (2b) axially extending from the inner raceway surface (2a) and
an inner ring (3) press fitted onto the axially extending cylindrical portion (2b) of the hub wheel (2) and formed on the outer circumferential surface with the other inner raceway surface (3a) opposing to the other outer raceway surface (10a),
and wherein the inner ring (3) is secured axially immovable relative to the hub wheel (2) by a caulked portion formed by plastically deforming radially outward the end of the axially extending cylindrical portion (3), and the inner end surface of the caulked portion (2c) abuts to the end surface (13a, 23a) of the shoulder (13,23) of the outer joint member (15) .

3. A bearing apparatus for a driving wheel of vehicle of claim 2 wherein the inner end surface of the caulked portion (2c) is formed as an inclined surface inclined at a predetermined angle relative to a vertical surface.

4. A bearing apparatus for a driving wheel of vehicle of claim 2 wherein the inner end surface of the caulked portion (2c) is formed as a substantially flat surface, and the end surface (23a) of the shoulder (23) is formed as an inclined surface inclined at a predetermined angle (α) relative to a vertical surface.

5. A bearing apparatus for a driving wheel of vehicle of any one of claims 1 through 4 wherein an axially deformable length between the end surface (13a, 23a) of the shoulder (13, 23) and the end surface of the inner member (2) is set within a range of 0.010-0.015 mm.
